(19) Europäisches Patentamt
European Patent Office
Office européen des brevets

(11) EP 4 459 389 A1

(12) EUROPEAN PATENT APPLICATION

(43) Date of publication:
06.11.2024  Bulletin 2024/45

(21) Application number: 23315151.3

(22) Date of filing: 02.05.2023

(51) International Patent Classification (IPC):
G05B 9/02 (2006.01)

(52) Cooperative Patent Classification (CPC):
G05B 9/02; G05B 19/042; G05B 19/4155

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Mitsubishi Electric R&D Centre Europe B.V.
1119 NS  Schiphol Rijk Amsterdam (NL)
Designated Contracting States:
CH FR GB LI NL

• MITSUBISHI ELECTRIC CORPORATION
Chiyoda-ku
Tokyo 100-8310 (JP)

(72) Inventors:
• Bouttier, Arnaud
35708 RENNES CÉDEX 7 (FR)
• Bechihi, Adel
35708 RENNES CÉDEX 7 (FR)

(74) Representative: Plasseraud IP
104 Rue de Richelieu
CS92104
75080 Paris Cedex 02 (FR)

(54) ENHANCED DISTANT CONTROL USING DATA COMMUNICATIONS

(57) The description proposes a method to control an agent (AGT) operating at least one actuator according to commands repeatedly received from a controller (CTLR), said agent receiving repeatedly measurement data from at least one sensor sensing an environment of the actuator, said measurement data defining, at an iteration k, a current state $x_k^n$ of the actuator's environment resulting from the application by the actuator of a nominal command $u_{k-1}^n$ at a previous iteration $k$-1, said nominal command $u_{k-1}^n$ at previous iteration $k$-1 being initially:
- computed by the controller (CTLR) based on a current state $x_{k-1}^n$ of the actuator's environment defined at least by measurement data acquired by the sensor during said previous iteration $k$-1, and
- transmitted by the controller (CTLR) to the agent (AGT) to be applied by the actuator,
    Wherein the controller (CTLR), at each iteration k:

- computes, in addition to said nominal command $u_k^n$ , a switching command $u_{k+1}^c$ based at least on the current state $x_k^n$ at said iteration k, and
- transmits to the agent (AGT) said switching command $u_{k+1}^c$ along with said nominal command $u_k^n$ , said switching command $u_{k+1}^c$ being intended to be used by the agent to operate the actuator in case no command is received by the agent following the application of the nominal command $u_k^n$ of iteration k.

FIG. 10

**Description**

The present invention relates to an automatic control of a dynamical system using data communications such as wireless data transmission for example.

The automatic control theory, hereafter simply reported as "*control*", is related to methods for the determination of laws for controlling dynamical systems that can be realized by automatic devices, i.e., without human intervention. The controlled systems can be of any kind such as a sewing machine, a robot, a car, any other vehicle, etc. At any given time, a dynamical system has a state $s_t$ representing a point in an appropriate state space $\mathcal{S}$. The system is typically made of one or several devices described as the *plant* that is required to be steered from an arbitrary initial state to an arbitrary final state or more generally to follow an arbitrary reference target trajectory. The state of the system is driven by the so-called *controller* that generates a control action applied to the plant through *actuators.*

The purpose of a controller is to bring the state of the plant close to a reference value. This could be achieved using an *open loop* controller, for which the control action from the controller is independent of the plant variables, that associates a command pattern to any desired state. Open loop controllers assume a perfect knowledge of the plant, which is not possible in practice. For instance, the behaviour of a vehicle depends on the number of passengers and the fuel level that are not measured in practice. Similarly, the behaviour of a vehicle depends on the strength of the wind, the slope of the road, grip variations, etc. As it is not possible to measure all these effects, it is common to model them as disturbances and to rely on *closed loop* control where the control action is dependent on the desired and achieved plant state as measured using sensors.

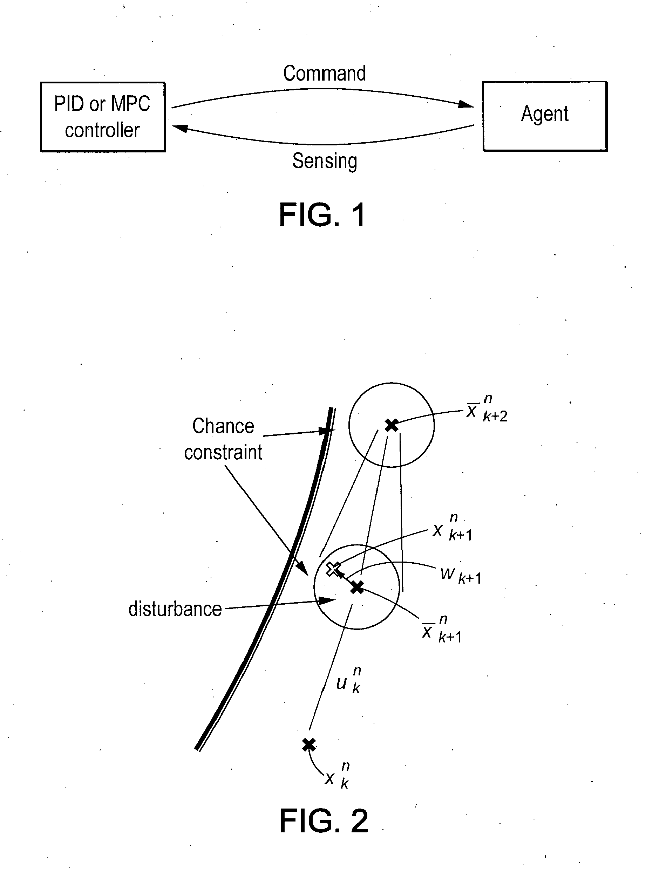

In control applications where the plant and the controller are connected using a wireless communication network as shown in the example of figure 1:

- the control action (arrow "Command" of figure 1) is transmitted from the controller (of PID or MPC type as, detailed below), to a generally so-called "Agent" (a plant, or an autonomous vehicle, or a vacuum cleaner, or a sewing machine, etc.) comprising actuators to apply the command from the controller and sensors to inform the controller of a current actual state of the agent, and
- reversely, measurements from the sensors of the agent are transmitted to the controller (arrow "Sensing" of figure 1).

Control applications can rely on any wireless transmission technology such as WiFi, Bluetooth, LTE, etc. More recently, the 3GPP standardization body specified the 5G system that incorporates dedicated means to address control applications, and more specifically ultra-reliable and low latency communications (URLLC). Wireless transmissions are suitable for mobile or transportable devices such as robots or vehicles of any kind such as Automated Guided Vehicles (AGV), Autonomous Mobile Robots (AMR), etc.

On the other hand, wireless communication systems are prone to packet losses due to radio propagation effects: attenuation loss, shadowing, multiplicative and additive noises, congestion effects when the timely transmission of packets requires more radio resources than available. As a result, the design of the control applications must account for the possible occurrence of packet losses, either in the transmission of the commands from the controller to the plant and/or of the state observations from the plant to the controller.

One of the most widely used mechanism in closed loop control is the proportional-integral-derivative controller ("PID" controller or "three-term" controller). A PID controller continuously calculates an error value e(t) as the difference between a desired setpoint (SP) and a measured process variable (PV) and applies a correction based on proportional, integral, and derivative terms (denoted P, I, and D respectively). PID controllers are widely used for several reasons: they do not require a model of the plant and are "easy" to tune and to implement. However, PID controllers are not optimal and can be unstable. Usually, they may suffer from "hunting": oscillation about an operating point. Another key limitation is that they do not account for a possibly existing model of the plant, thus preventing from predicting a future behaviour of the system to control.

Another type of controllers, called "MPC" controllers (for "Model Predictive Control"), falls in the scope of the *optimal control* theory, a branch of mathematical optimization that deals with finding a control for a dynamical system over a period of time such that an objective function is optimized, thus implicitly relying on a model of the system. The three keywords: model-based, period of time and optimization characterize well this type of controller. The controller is optimized for each iteration considering the future evolution of the system using the model according to a given objective function. The solution of the optimal problem can be obtained using the Dynamical Programming (DP) method that computes an optimal policy or control law u(x) in the case of additive cost functions, where x designates here the state of the system controlled by the controller. An optimal policy has the property that whatever the initial state and initial decision are, the remaining decisions must constitute an optimal policy with respect to the state resulting from the first decision. A dynamic optimization problem in discrete time can be stated in a recursive, step-by-step form known as backward induction by writing down the relationship between the value function in one period and the value function in the next period.

Dynamic Programming (DP) provides an optimal policy that can be computed off-line and used to generate the control over an entire horizon. However, it rapidly suffers from the notorious "curse of dimensionality", which prevents its direct applications when the dimension of the state space is high. Model Predictive Control appears as an alternative to DP with a lower complexity. MPC replaces the offline determination of a control law by an online solution of an optimal control problem whose solution yields the control action (not a function but a value) for the current state. It is therefore useful in situations where an explicit solution of the optimal control problem for all initial states cannot be easily obtained. Since so few optimal control problems admit an explicit offline solution, it is this feature that makes MPC so useful for many problems. In this technique, instead of looking for a policy offline, an "optimal" control sequence (implicit policy computed for the current state value) is looked for at each iteration, then only the first control value is applied, and this is repeated in a next iteration. It is simpler and enables to add constraints enforcement, which is a key advantage of MPC.

Interestingly, in the deterministic case, the optimal policy computed using DP gives the same value than the MPC for the first state value. Deterministic MPC in its basic form is open loop. But as previously stated, the systems are not modelled accurately, either intentionally or due to a lack of measurements. It is common to talk about uncertain systems that require closed loop control. DP can also be applied to uncertain systems using a stochastic description of the disturbances in the model and optimizing over a statistical objective function. But the stochastic DP method suffers from the same course of dimensionality than the deterministic DP. Several approximations have been devised in order to reduce the complexity of DP. The so-called Approximate Dynamic Programming (ADP) approaches are usually divided into four categories according to the assumptions used to compute the policy:

- Open-loop solutions: The policy is computed assuming only the knowledge of the initial state value;
- Open-loop feedback solutions: The policy is computed assuming the knowledge of all states (or observations) up to time k while being independent of the pattern of future system observations;
- m-stage ahead solutions: Like DP but where the cost-to-go function is approximated instead of being iteratively built (this appears as a way to partially close the loop);
- Closed-loop solutions: Like in DP, those approaches consider the measurements up to k and some statistics of future observations.

Hereafter, an example of embodiment can aim at the MPC approach that, depending on the hypothesis, falls in the scope of the first two classes of solutions listed above. The MPC approach has already been introduced in the deterministic case above. Overall, it can be characterized by the following properties:

- Availability of a space state model for the plant;
- MPC replaces the offline determination of a control law by an online solution of an optimal control problem whose solution yields the control action for the current state;
- The control value (command) is computed assuming the knowledge of the past system observations gathered up until the current iteration (or simply the first one) while being independent of the pattern of future system observations.

Thanks to its relatively low computational complexity combined with the ability to cope with constraints, the MPC methodology for uncertain systems spread out into many different declinations that can be divided into three main classes:

- Certainty equivalence approaches;
- Deterministic approaches;
- Stochastic approaches.

In the deterministic approaches, the process or model noise is assumed to be unknown but bounded. This assumption enables to look for robust MPCs such as so-called "min-max" MPCs where the command values are computed to be relevant whatever the values of the process noise, at the cost of a very conservative control. Another alternative is provided by the so-called "tube based MPCs" where the state is decomposed as the sum of the nominal state and a noise component (due to disturbance). The principle is to analyse the behaviour of the nominal system in the presence of disturbances. It can be shown that the nominal MPC can be stable if the state remains in given set at each iteration, defining a tube. The controller is thus built as the deterministic MPC and a second controller that keeps the system to "remain in the tube".

It can be shown that in the linear case with Gaussian disturbances (LOG algorithm), the "optimal" MPC controller is of the form $v_k(x) = v_k + K(x - \bar{x}_i)$, where $K$ is a gain parameter generally computed beforehand, and $v_k$ are scalar values taken according to state x and its average $\bar{x}_i$. The application of the tube based MPC reduces to the computation of the nominal (i.e., deterministic) MPC where the optimization is performed over the scalar values $v_k$. It appears from this expression, that the command is built using the knowledge of the current state value, i.e., is of feedback type, a mandatory feature when dealing with uncertain systems. The knowledge of the state is used to compensate at least partially for the disturbance contribution and keep the state close to the target trajectory. Several other solutions relying on the feedback from the past state values have been devised:

- Pre-stabilization;
- Tube-MPC;
- Linear feedback;
- Disturbance feedback.

The linear feedback and disturbance feedback approaches are built such as to benefit from a "time-varying" gain in the reference tube-based solutions, enabling to better compensate for the impact of the past disturbances.

It is assumed here that the state value is observed at each iteration (full state MPC). In can occur that the state is partially observed or observed through noise. In such a case, a solution is to rely on the certainty equivalent MPCs that implement the underlying deterministic MPC (with fixed values for the process disturbances) and where the state is replaced by a state estimate. The state can be estimated using a Luenberger observer in the determinist context. If the observation noise can be modelled as a stochastic noise process with known statistics, the state can be estimated using Bayesian filtering algorithms such as the Kalman filter for Gaussian noise.

In case the process noise can itself be described as a stochastic process with known statistics, another solution is to rely on the stochastic MPC approaches where the cost function is evaluated as a statistical function (typically the statistical expectation).

The different feedback approaches introduced above can be extended to the Stochastic MPC solutions (SMPC). Another key advantage of the SMPC approach is to enable the enforcement of constraints in a statistical manner, e.g., using chance constraints. The SMPC approaches can also be devised according to whether the state is perfectly observed (state feedback) at each iteration of partially measured and needs to be estimated (output feedback).

In many control applications relying on a stochastic MPC algorithm, it is assumed that the MPC algorithm is implemented in a remote controller away of the plant where the transmission system is used to transmit the command from the controller to the plant and the state observation from the plant to the controller as depicted above when referring to figure 1.

However, wireless systems are prone to packet losses, and it may occur that a command does not reach the agent, or an observation does not reach the controller that is not able to compute a new command. It is therefore required to define a strategy to perform the control of the plant when the controller is not able to provide a new command to the plant computed according to the control algorithm operated in its nominal mode. This command will be denoted as the nominal command in the sequel. The impact on the plant of losing a nominal command naturally depends on the nature of the application. Some applications may not afford losing a single command and shall go in safety or emergency mode. However, many applications can handle the loss of one to a few consecutive commands. Typical strategies consist in applying no command, i.e., to leave the system behave in open loop mode, or maintaining the command to its last value.

The loss of commands may be particularly damageable however in case the plant state needs to remain in a given operation domain or area, typically through the application of constraints enforcement in the MPC framework. For instance, dealing with a robot or a vehicle controlled in position using a MPC algorithm, the ability to handle the loss of a nominal command depends on the proximity to an obstacle. Close to an obstacle, losing one single nominal command may lead the vehicle into a critical situation. A basic strategy in such a situation is to increase the safety distance to any obstacle through the application of chance constraints. The issue is here that it leads the plant to always enforce constraints that are relevant in case of command loss that may occur only from time to time. Overall, the performance of the control algorithm is lowered for very rare events.

The present disclosure aims to improve the situation.

It proposes to that end a method to control an agent operating at least one actuator according to commands repeatedly received from a controller, said agent receiving repeatedly measurement data from at least one sensor sensing an environment of the actuator, said measurement data defining, at an iteration $k$, a current state of the actuator's environment resulting from the application by the actuator of a nominal command at a previous iteration $k$-1,
said nominal command at previous iteration $k$-1 being initially:

- computed by the controller based on a current state of the actuator's environment defined at least by measurement data acquired by the sensor during said previous iteration $k$-1, and
- transmitted by the controller to the agent to be applied by the actuator,

Wherein the controller, at each iteration $k$:

- computes, in addition to said nominal command, a switching command based at least on the current state at said iteration $k$, and
- transmits to the agent said switching command along with said nominal command, said switching command being intended to be used by the agent to operate the actuator in case no command is received by the agent following the application of the nominal command of iteration $k$.

Therefore, it is proposed to send two commands: one nominal command to operate the actuator in a normal way in a current cycle k, and a switching command to be stored (at least temporarily) and used by the actuator in next cycle k+1 in the case of a communication blackout between the controller and the agent (in a "blind" mode) where the agent does not receive the nominal command for next cycle k+1. Therefore, that "switching" command relates to the fact that the agent switches its operation in such a blind mode when it does not receive any nominal command from the controller.

Therefore, in case of a connection between the agent and the controller through a wireless network for example, a loss of at least one data packet due to temporary bad network conditions can cause indeed a non-reception of a command by the agent, and subsequently the use of the switching command by the agent.

Of course, other reasons than a communication loss are possible, for example an occasional data corruption of the nominal command when stored at the agent side, or others.

The agent can thus apply the nominal command (labelled hereafter $u_k^n$ like in the accompanying drawings) received from the controller, and can store in memory the switching command (labelled $u_{k+1}^c$) received along with the nominal command ($u_k^n$) so as to retrieve from that memory and use the switching command ($u_{k+1}^c$) if a next nominal command ($u_{k+1}^n$) is not received during a next iteration $k$+1.

The application of the switching command ($u_{k+1}^c$) is therefore assumed to drive the actuator's environment, in a next-next iteration $k$+2, to an expected state (labelled $\bar{x}_{k+2}^r$) from a previous expected state ($\bar{x}_{k+1}^r$) at said "next iteration $k$+1", which is assumed to result from the application of the last nominal command ($u_k^n$) received by the agent.

It is thus also assumed that, if the controller does not receive a measurement at a cycle k, then the controller does not send a new nominal command for this cycle k, and the agent operates on the basis of the switching command ($u_k^c$) previously received with the nominal command for cycle k-1.

More particularly, the controller can compute the switching command ($u_{k+1}^c$) based on:

- a first resilient command ($u_k^r$) supposed to drive the environment state to a first assumed state ($\bar{x}_{k+1}^r$) at said next iteration $k$+1,
- a second resilient command ($u_{k+1}^r$) supposed to drive the environment state to a second assumed state ($\bar{x}_{k+2}^r$) at said next-next iteration $k$+2, and
- a compensation to take into account the actual application of the nominal command ($u_k^n$) instead of the first resilient command ($u_k^r$) (at said iteration k+1).

In an embodiment, this compensation is determined from chance constraints statistical calculations detailed below.

In an embodiment, the controller applies a rule according to which a state $x_{k+1}$ at a next iteration $k$+1 depends on:

- the state $x_k$ at current iteration $k$,
- the command $u_k$ applied at current iteration $k$, and
- a random process $w_k$ caused by environment disturbance at iteration $k$.

In this embodiment, the controller implements a stochastic model predictive control where an uncertain part of the actuator's environment is statistically modelled, represented by an equation of the type: $x_{k+1} = Ax_k + Bu_k + Ew_k$, where:

- $k$ is a discrete time related to successive iterations,

- vector $x_k \in \mathbb{R}^n$ denotes the current state at iteration $k$,

- vector $u_k \in \mathbb{R}^m$ denotes the command to be applied at iteration $k$,

- vector $w_k \in \mathbb{R}^q$ is the random process caused by environment disturbance at iteration $k$,

- A, B and E are matrices.

In this embodiment, the switching command is therefore given by:

$$u_{k+1}^c = B^\# \bar{x}_{k+2}^r - B^\# A \bar{x}_{k+1}^n,$$

Where $B^\#$ is the pseudo-inverse matrix of matrix $B$.

In this embodiment, the assumed state following the application of the nominal command $u_k^n$, said first assumed state after application of the first resilient command $u_k^r$, and said second assumed state after application of the second resilient command $u_{k+1}^r$, can be respectively expressed as:

$$\bar{x}_{k+1}^n = A x_k^n + B u_k^n,$$

$$\bar{x}_{k+1}^r = A x_k^n + B u_k^r,$$

$$\bar{x}_{k+2}^r = A \bar{x}_{k+1}^r + B u_{k+1}^r.$$

This shows the differences between real measured states and assumed states.

In an embodiment, the nominal command can be given by: $u_{0|k}^n = v_{0|k}^n$, while a command is expressed by:

$$u_{i|k} = \sum_{j=1}^{i-1} M_{i-j|k} w_{j|k} + v_{i|k}, i = 0, ..., N-1,$$

Where $\sum_{j=1}^{i-1} M_{i-j|k} w_{j|k}$ represents a feedback component compensating for deviation due to environment disturbance.

In these formal notations above, while $u_k^n$ corresponds to the nominal command actually applied at iteration $k$ as explained above, $u_{i|k}^n$, on the other hand, corresponds to the nominal command to be applied at the iteration $k+i$ as obtained from an algorithm (such as an MPC algorithm (Model Predictive Control) for example) assuming knowledge of the state value $x_k^n$. As the MPC computes the commands over a finite horizon, despite the assumption the future state will be observed, the relevance of the command decreases with the increasing indices $i$. This is for that reason that only the first (sometimes some more) command is actually applied to the system, i.e. $u_k^n = u_{0|k}^n$ and the MPC is applied again to compute the next command following the same principle.

in the affine disturbance feedback MPC, the command $u_{i|k}^n$ is computed as the sum of a driving variable $v_{i|k}^n$

and a component $\sum_{j=0}^{i-1} f_{ij}(w_{j|k})$ aiming at compensating from the past disturbances assumed to be retrieved from the observations. Logically, the first command does not include any disturbance component as the initial state is perfectly known. As a result, $u_{0|k}^n$ corresponds to the nominal command noted above $u_k^n$, with $u_k^n = u_{0|k}^n = v_{0|k}^n$.

In this embodiment, parameters $M_{i\text{-}j|k}$ are such that $M_{i-j|k} \in \mathbb{R}^{m \times r}$ and are each one represented by a matrix of coefficients associated with past k-step disturbances (i.e. the disturbance values observed over the instants k+1 to k+i-1).

In an embodiment, the controller computes an optimization solution at least for determining the nominal command, based on:

$$\theta_k^{n*} = \underset{\theta_k^n}{arg\,min}\,\mathbb{E}\left(J_N(x_k^n, \theta_k^n)\right), \text{ with } J_N(x_k^n, \theta_k^n) = l_N\left(x_{N|k}^n\right) + \sum_{i=0}^{N-1} l\left(x_{i|k}^n, \theta_{i|k}^n\right)$$

subject to:

$$\mathbf{x}_k^n = \mathbf{A}x_{0|k}^n + \mathbf{B}u_k^n + \mathbf{E}w_k^n,$$

$$\mathbf{u}_k^n = \mathbf{M}_k^n \mathbf{w}_k^n + \mathbf{v}_k^n,$$

$$x_{0|k}^n = x_k,$$

$$\theta_k^n = (\mathbf{M}_k^n, \mathbf{v}_k^n),$$

Where:

$$\mathbf{x}_k = \left[x_{0|k}, x_{1|k}, \ldots, x_{N|k}\right]^t,$$

$$\mathbf{u}_k = \left[u_{0|k}, x_{1|k}, \ldots, x_{N-1|k}\right]^t,$$

$$\mathbf{w}_k = \left[w_{0|k}, w_{1|k}, \ldots, w_{N-1|k}\right]^t,$$

In these notations above, $x_{i|k}$ is a predicted state of a future state $x_{k+i}$ assuming optimized commands $u_{j|k}$, $j = 0, \ldots i - 1$ have been applied and $w_{i|k}$ is a disturbance value evaluated from the observation of state $x_{i|k}$.

Matrices $\mathbf{A} \in \mathbb{R}^{(N+1)n}$, $\mathbf{B} \in \mathbb{R}^{(N+1)n \times Nm}$, and $\mathbf{E} \in \mathbb{R}^{(N+1)n \times Nq}$ are given by:

$$\mathbf{A} = \begin{bmatrix} I_n \\ A \\ A^2 \\ \vdots \\ A^N \end{bmatrix}, \mathbf{B} = \begin{bmatrix} 0 & 0 & \cdots & 0 \\ B & 0 & \cdots & 0 \\ AB & \ddots & 0 & 0 \\ \vdots & \ddots & B & 0 \\ A^{N-1}B & \cdots & AB & B \end{bmatrix}, \mathbf{E} = \begin{bmatrix} 0 & 0 & \cdots & 0 \\ E & 0 & \cdots & 0 \\ AE & \ddots & 0 & 0 \\ \vdots & \ddots & E & 0 \\ A^{N-1}E & \cdots & AE & E \end{bmatrix}$$

And

$$\mathbf{v}_k = \begin{bmatrix} v_{0|k}, v_{1|k}, \dots, v_{N-1|k} \end{bmatrix}^t,$$

$$\mathbf{M}_k = \begin{bmatrix} 0 & 0 & \cdots & 0 \\ M_{1|k} & 0 & \cdots & 0 \\ M_{2|k} & \ddots & 0 & 0 \\ \vdots & \ddots & 0 & 0 \\ M_{N-1|k} & \cdots & M_{1|k} & 0 \end{bmatrix}.$$

In this embodiment, the controller computes an optimization solution for determining furthermore said first and second resilient commands, based on:

$$\boldsymbol{\theta}_k^{r*} = \underset{\boldsymbol{\theta}_k}{arg\,min}\, \mathbb{E}\left( J_N(x_k^r, \boldsymbol{\theta}_k^r)\right), \text{with } J_N(x_k^r, \boldsymbol{\theta}_k^r) = l_N\left(x_{N|k}^r\right) + \sum_{i=0}^{N-1} l\left(x_{i|k}^r, \theta_{i|k}^r\right)$$

subject to

$$\mathbf{x}_k^r = \mathbf{A}x_{0|k}^r + \mathbf{B}\mathbf{u}_k^r + \mathbf{E}\mathbf{w}_k^r,$$

$$\mathbf{u}_k^r = \mathbf{M}_k^r\mathbf{w}_k^r + \mathbf{v}_k^r,$$

$$u_{1|k}^r = v_{1|k}^r,$$

$$x_{0|k}^r = x_k,$$

$$\boldsymbol{\theta}_k^r = (\mathbf{M}_k^r, \mathbf{v}_k^r),$$

Where said first and second resilient commands are respectively noted above $u_{0|k}^r, u_{1|k}^r$, with

$$u_k^r = u_{0|k}^r \text{ and } u_{k+1}^r = u_{1|k}^r.$$

In this embodiment, chance constraints (as introduced previously above) can be applied to compute said commands (all commands: the first and second resilient commands, and thereby the nominal and switching commands) and are given by:

$$\mathbb{P}(\mathbf{G}_i \mathbf{x}_k^n \leq \mathbf{g}_i) \geq 1 - \alpha_x, i = 1, \dots, l,$$

$$\mathbb{P}(\mathbf{S}_i \mathbf{u}_k^n \leq \mathbf{s}_i) \geq 1 - \alpha_u, i = 1, \dots, q,$$

representing probabilistic constraints on state and control input,

$\mathbf{G}_i$ and $\mathbf{S}_i$ denoting each row of matrix $\mathbf{G}$ and $\mathbf{S}$, with $\mathbf{G} \in \mathbb{R}^{a \times (N+1)n}$, $\mathbf{g} \in \mathbb{R}^a$, $\mathbf{S} \in \mathbb{R}^{b \times Nm}$, $\mathbf{s} \in \mathbb{R}^b$,

$\mathbf{g}_i$ and $\mathbf{s}_i$ denoting each component of vectors $\mathbf{g}$ and $\mathbf{s}$, and

$\alpha_x$ and $\alpha_u$ denoting a probability level of constraint violation (that can be restricted for example to be in [0; 0,5]).

The present description aims also at a system comprising a controller and an agent configured to implement the method as described above.

The present description aims also at a controller of such a system, configured for computing and transmitting to the controller said switching command along with said nominal command.

The present description aims also at an agent of the system, especially configured for:

- using said nominal command when currently received, and storing the switching command received along with the nominal command, or
- retrieving and using a latest received switching command when said nominal command is not received.

The present description aims also at a computer program comprising instructions causing the implementation of the method above, when the instructions are run by a processor.

More details are presented in the specification below, with reference to the appended drawings where:

- Figure 1 shows schematically an interaction between a controller and an agent (comprising typically a set of actuators and a set of sensors),
- Figure 2 illustrates disturbance compensation using feedback,
- Figure 3 illustrates the problem when a state $x_{k+1}^n$ is not received by the controller, from the agent,
- Figures 4 and 5 illustrate the principle of the resilient SMPC,
- Figure 6 illustrates the principle of the nominal to resilient mode switching, according to an embodiment of the present description,
- Figure 7 illustrates an implementation of the general principle of a proposed algorithm according to an embodiment of the present description,
- Figure 8 shows main steps of a method resulting from the implementation of the proposed algorithm according to an embodiment of the present description,
- Figure 9 shows schematically a system according to an embodiment of the present description, and
- Figure 10 represents a communication diagram between entities of the system of figure 9.

The method above can be implemented advantageously in control applications relying on a stochastic MPC algorithm with chance constraints enforcement to keep the plant in a safe operation domain. The problem to solve is to define a strategy to handle the loss of one or several consecutive commands without always degrading the overall performance of the control algorithm due to scarce events. Dealing with the MPC approach, a solution shall be to apply the second command computed by the algorithm at the previous iteration. But this is possible only in the case of the deterministic MPC. The feedback MPCs require the availability of the next state observation to compute this command.

It is proposed in the present description to operate in parallel two MPC algorithms:

- the "usual" nominal MPC computed assuming that the state will be observed at the next iteration, and

- a resilient MPC that assumes the next state will not be observed.

At each iteration, the controller sends the nominal command for the current iteration and the resilient command for the next iteration. In case the plant does not receive any command, it uses the resilient command of the previous iteration to drive the plant. But this command was computed using the resilient MPC that assumes a different command was applied at the previous iteration. The algorithm advantageously implements a compensation method to drive the state as if the state at the previous iteration has been driven by the first resilient command. This requires that the updated state assuming the plant had been previously driven with the resilient MPC is observable from the current state obtained using the nominal state. In order to guarantee the feasibility of this operation, the nominal MPC is computed taking into account the feasibility of the compensation as an additional constraint. This constraint may reduce the operation domain (because it adds another constraint on the region the state can reach) but in a less extend than when using a robust MPC at all times.

The nominal stochastic MPC is disclosed hereafter.

Remote control applications using a stochastic MPC algorithm where the uncertain part of the plant is statistically modelled. It is assumed that the plant to be controlled can be described as a linear system with space time equations:

$$x_{k+1} = Ax_k + Bu_k + Ew_k,$$

$$y_k = Cx_k + z_k,$$

Where:

- $k$ is the discrete time,

- $x_k \in \mathbb{R}^n$ denotes the state,

- $u_k \in \mathbb{R}^m$ denotes the control input,

- $w_k \in \mathbb{R}^q$ is a random process or system disturbance,

- $y_k \in \mathbb{R}^p$ denotes the observation of the state,

- $z_k \in \mathbb{R}^p$ is a random observation noise,

- A, B, E and C are parameters that describe the dynamics of the system, and which can be represented by respective matrices, here.

The present disclosure also applies to non-linear systems through for example a linearization operation. To start, it is assumed that the state is observed as such $y_k = x_k$ (full state feedback).

The present disclosure can also be extended to a partial and/or noisy observation output feedback. MPC algorithms assume the knowledge of the system equations, enabling for the prediction of the system state over a finite horizon $N$. The state at time $k + i + 1$ is thus predicted using the equation:

$$x_{i+1|k} \doteq Ax_{i|k} + Bu_{i|k} + Ew_{i|k}, \text{with } i = 0, \dots, N - 1.$$

It is assumed that $x_{0|k} = x_k$ is known. The predicted state $x_{i|k}$ can be also denoted usually as $x_{k+i|k}$. The objective of the MPC algorithm is to compute the control input $u_k$ to fulfil a control performance over the prediction horizon $N$. The MPC algorithm iteratively computes a sequence of commands $u_{i|k}$, with $i = 0, \dots, N - 1$ and applies the first command $u_k = u_{0|k}$ to the plant.

As previously explained, mitigating for disturbance in control is commonly achieved by means of feedback control policies. The core difficulty with this type of approach is that optimizing the feedback policy over arbitrary nonlinear functions is extremely difficult. A basic solution is to parameterize the control policy as:

$$u_{i|k} = Kx_{i|k} + v_{i|k},$$

wherein $K$ is the feedback control and $v_{i|k}$ a sequence of scalar control variables. Doing that way, the MPC algorithm can still be implemented as an optimization problem over scalar values while benefiting from the feedback to combat disturbances. This approach is like the one used in tube based MPC. Several solutions exist to compute the control gain to guarantee stability but with rather conservative performance. An alternative solution is to parameterize the control policy in terms of the affine functions of the sequence of states:

$$u_{i|k} = \sum_{j=0}^{i} K_{i,j} x_{j|k} + v_{i|k}, i = 0, \dots, N - 1.$$

However, the set of constraint-admissible policies of this form is nonconvex for a quadratic cost function. Another solution is to parameterize the control policy as an affine function of the disturbances, called the "affine disturbance feedback control policy":

$$u_{i|k} = \sum_{j=1}^{i-1} L_{i,j|k} w_{j|k} + v_{i|k}, i = 0, \dots, N - 1.$$

This kind of parameterization is very well known in stochastic programming and has been shown to be equivalent to state feedback policies. The advantage of affine disturbance feedback control parameterization is that the set of its decision variables is guaranteed to be convex. However, the main disadvantage of this parameterization is that the number of decision variables grows quadratically with the prediction horizon, so the real-time calculation is disastrous when the prediction horizon grows. An alternative is given by:

$$u_{i|k} = \sum_{j=1}^{i-1} M_{i-j|k} w_{j|k} + v_{i|k}, i = 0, \dots, N - 1.$$

wherein $M_{i-j|k} \in \mathbb{R}^{m \times r}$ is the matrix of coefficients associated with the past k-step disturbances. The present disclosure applies to any solution that implies the past sequence of states. For the sake of simplicity, it is assumed hereafter that the affine disturbance feedback control policy given above is used.

It assumed that at each iteration, the full state is observed, i.e., $x_{i|k}$ is available to compute $u_{i|k}$, enabling the implementation of feedback to compensate the impact of the disturbance. In the present case, since full state feedback is assumed, the past disturbance sequence is easily calculated as the difference between the predicted and actual states at each step:

$$w_{i|k} = x_{i+1|k} - A x_{i|k} - B u_{i|k}.$$

For convenience, the prediction of the system's behaviour over the finite horizon $N$ is described as:

$$\mathbf{x}_k = \mathbf{A} x_{0|k} + \mathbf{B} \mathbf{u}_k + \mathbf{E} \mathbf{w}_k,$$

wherein

$$\mathbf{x}_k = \begin{bmatrix} x_{0|k}, x_{1|k}, \dots, x_{N|k} \end{bmatrix}^t,$$

$$\mathbf{u}_k = \left[u_{0|k}, x_{1|k}, \ldots, x_{N-1|k}\right]^t,$$

$$\mathbf{w}_k = \left[w_{0|k}, w_{1|k}, \ldots, w_{N-1|k}\right]^t.$$

Matrices $\mathbf{A} \in \mathbb{R}^{(N+1)n}$, $\mathbf{B} \in \mathbb{R}^{(N+1)n \times Nm}$, and $\mathbf{E} \in \mathbb{R}^{(N+1)n \times Nq}$ are given as follows

$$\mathbf{A} = \begin{bmatrix} I_n \\ A \\ A^2 \\ \vdots \\ A^N \end{bmatrix}, \mathbf{B} = \begin{bmatrix} 0 & 0 & \ldots & 0 \\ B & 0 & \cdots & 0 \\ AB & \ddots & 0 & 0 \\ \vdots & \ddots & B & 0 \\ A^{N-1}B & \ldots & AB & B \end{bmatrix}, \mathbf{E} = \begin{bmatrix} 0 & 0 & \ldots & 0 \\ E & 0 & \cdots & 0 \\ AE & \ddots & 0 & 0 \\ \vdots & \ddots & E & 0 \\ A^{N-1}E & \ldots & AE & E \end{bmatrix}.$$

It is assumed here that $\mathbf{E}$ is full rank.

For convenience, matrix $\mathbf{M}_k \in \mathbb{R}^{Nm \times Nq}$ and vector $\mathbf{v}_k \in \mathbb{R}^{Nm}$ are also defined in such a way that:

$$\mathbf{v}_k = \left[v_{0|k}, v_{1|k}, \ldots, v_{N-1|k}\right]^t,$$

$$\mathbf{M}_k = \begin{bmatrix} 0 & 0 & \ldots & 0 \\ M_{1|k} & 0 & \cdots & 0 \\ M_{2|k} & \ddots & 0 & 0 \\ \vdots & \ddots & 0 & 0 \\ M_{N-1|k} & \ldots & M_{1|k} & 0 \end{bmatrix}.$$

In contrast to robust MPC, stochastic MPC (SMPC) finds a different way to solve MPC problems while considering uncertainties. SMPC utilizes probabilistic descriptions of objective values and constraint violations and allows accounting for acceptable levels of risk during system operation. The disturbances are assumed to be independent and identically normally distributed random variables (i.e., $w_{0|k} \sim \mathcal{N}(0, I)$ ). The system has probabilistic constraints on state and control input, such that:

$$\mathbb{P}(\mathbf{G}\mathbf{x}_k \leq \mathbf{g}) \geq 1 - \alpha_x,$$

$$\mathbb{P}(\mathbf{S}\mathbf{u}_k \leq \mathbf{s}) \geq 1 - \alpha_u,$$

wherein $\mathbf{G} \in \mathbb{R}^{a \times (N+1)n}$, $\mathbf{g} \in \mathbb{R}^a$, $\mathbf{S} \in \mathbb{R}^{b \times Nm}$, $\mathbf{s} \in \mathbb{R}^b$. $\alpha_x$ and $\alpha_u$ denote the probability level of constraint violation, and they can be restricted for example to be in an interval such as (for example) [0, 0.5]. These constraints are called chance-constraints. Without losing in generality, the chance constraints on states and control inputs are assumed to consist of individual constraints ($\mathbf{G}$ and $\mathbf{S}$ are diagonal), each a linear function of one state variable. Hence, the chance constraints take the form:

$$\mathbb{P}(\mathbf{G}_i\mathbf{x}_k \leq \mathbf{g}_i) \geq 1 - \alpha_x, i = 1, \dots, a,$$

$$\mathbb{P}(\mathbf{S}_i\mathbf{u}_k \leq \mathbf{s}_i) \geq 1 - \alpha_u, i = 1, \dots, b.$$

where $\mathbf{G}_i$ and $\mathbf{S}_i$ denote each row of the matrix $\mathbf{G}$ and $\mathbf{S}$, $\mathbf{g}_i$ and $\mathbf{s}_i$ denote each component of the vector $\mathbf{g}$ and $\mathbf{s}$. Assuming the system states can be measured at all times, the finite-horizon SMPC problem with chance constraints is stated as follows:

$$\theta_k^* = \underset{\theta_k}{arg\,min}\, \mathbb{E}\left(J_N(x_k, \theta_k)\right),$$

$$J_N(x_k, \theta_k) = l_N\left(x_{N|k}\right) + \sum_{i=0}^{N-1} l\left(x_{i|k}, \theta_{i|k}\right),$$

subject to

$$\mathbf{x}_k = \mathbf{A}x_{0|k} + \mathbf{B}\mathbf{u}_k + \mathbf{E}\mathbf{w}_k,$$

$$\mathbb{P}(\mathbf{G}_i\mathbf{x}_k \leq \mathbf{g}_i) \geq 1 - \alpha_x, i = 1, \dots, l,$$

$$\mathbb{P}(\mathbf{S}_i\mathbf{u}_k \leq \mathbf{s}_i) \geq 1 - \alpha_u, i = 1, \dots, q,$$

$$\mathbf{u}_k = \mathbf{M}_k\mathbf{w}_k + \mathbf{v}_k,$$

$$x_{0|k} = x_k,$$

$$\theta_k = (\mathbf{M}_k, \mathbf{v}_k).$$

Upon completion of the optimization, the algorithm applies the following command to the plant:

$$u_k = u_{0|k}.$$

Without losing in generality, a quadratic cost function can be assumed such that:

$$J_N(x_k, \theta_k) = x_{N|k}Q_N x_{N|k} + \sum_{i=0}^{N-1}\left(x_{i|k}Q x_{i|k} + u_{i|k}R u_{i|k}\right),$$

13

wherein $Q > 0$, $Q_N > 0$, and $R > 0$ are given symmetric matrices of appropriate dimensions.

The *resilient* stochastic MPC algorithm construction is now described hereafter.

The basic assumption is here that the controller and the agent are connected using a communication that may be unstable (for example due to temporary bad conditions of a wireless communication between the controller and the agent, or simply because data from the set of sensors might be temporarily corrupted, etc.). The agent transmits to the controller the observation of the state of the actuators' environment (sensed by the sensors). This state is assumed to be perfectly known. From the knowledge of this state, the controller computes a command signal using an SMPC algorithm as described in the previous section and sends this command to the agent to be implemented by the set of actuators. For example, in a case of a wireless communication network connecting the controller to the agent, due to radio propagation impairments, it may occur that data packets get lost, either the state observation or the command. In either case, the agent does not get a new command to drive the actuators. It is therefore required to define a strategy to perform the control of the agent when the controller is not able to provide a new command to the agent computed according to the control algorithm operated in its nominal mode. This command is denoted as the "nominal command" hereafter. The impact on the actuators' environment (for example in a plant, a machine, an autonomous vehicle, etc.) of losing a nominal command naturally depends on the nature of the application. Some applications may not afford losing a single command and shall go in safety or emergency mode. However, many applications can handle the loss of one to a few consecutive commands (typically a plant or a machine, or even an autonomous vehicle for a shorter time period of communication loss).

Hereafter, for the sake of notations' shortening, the actuators and their environment (sensed by the set of sensors) are simply called a "plant".

Typical strategies consist in applying no command, or maintaining the command to its last value. The loss of commands may be particularly damageable in case the plant state needs to remain in a given operation domain or area, typically through the application of constraints enforcement in the MPC framework. For instance, dealing with a robot or a vehicle controlled in position using a MPC algorithm, the ability to handle the loss of a nominal command depends on the proximity to an obstacle. Close to an obstacle, losing one single nominal command may lead the vehicle into a critical situation. A basic strategy in such a situation is to increase the safety distance to any obstacle. The issue is here that it leads the plant to always enforce constraints that are relevant in case of command loss that may occur only from time to time.

Dealing with the MPC approach, a solution could be to apply the second command computed by the algorithm at the previous iteration, but this is possible only in the case of the deterministic MPC. The feedback MPCs require in general the availability of the next state observation to compute this command. An alternative would be to rely on a robust MPC algorithm that does not assume the availability of the state observations, but dealing with applications involving constraints, this is basically equivalent to significantly increasing the safety distance to any obstacle.

It is proposed here to rely on a variation of the nominal SMPC in the objective to mitigate at most the deviation from the nominal behaviour. The commands of the nominal SMPC are computed as follows:

$$u_{0|k} = v_{0|k}$$

$$u_{1|k} = M_{1|k} w_{0|k} + v_{1|k}$$

$$u_{2|k} = M_{1|k} w_{0|k} + M_{2|k} w_{1|k} + v_{2|k}$$
$$\vdots$$

The variation of the nominal SMPC is obtained with the additional constraint:

$$u_{1|k} = v_{1|k}$$

This constraint indicates to the algorithm the unavailability of the observation $w_{0|k}$ at the iteration $k + 1$. It is important to mention that it is assumed that the observation is finally made available for the following iteration, thus enabling to limit the impact of the loss (thus, there is no need to enforce $M_{1|k} = 0$ as it is used for the consecutive commands). The corresponding MPC is called hereafter the resilient SMPC and the corresponding commands, the resilient commands. The motivation is here to drive the system whenever possible using the nominal SMPC and apply the resilient command that deviates from the nominal one only upon occurrence of a packet loss. From now on, the variables related to the nominal and resilient SMPC algorithms will be respectively differentiated using a superscript $(.)^n$ and $(.)^r$.

Referring to figure 2 showing a disturbance compensation using feedback, the state is updated with the nominal command $x_{k+1}^n = Ax_k^n + Bu_k^n + Ew_k^n$ , with $u_k^n = \sum_{j=0}^{i-1} M_{i-j|k} w_{k+i-j} + v_k$ , where $\sum_{j=0}^{i-1} M_{i-j|k} w_{k+i-j}$ represents the feedback component compensating for the deviation due to disturbance, and illustrated on figure 2 by the two lateral lines on both sides of the central line between $\bar{x}_{k+1}^n$ and $\bar{x}_{k+2}^n$ . In figure 2, the circles schematically represent the values that the state is most likely to reach due to disturbance (e.g., for a given percentile of the noise probability function). The chance constraints are added to the optimization in order to keep low the probability that the disturbance brings the state on the left of the thick line representing an obstacle.

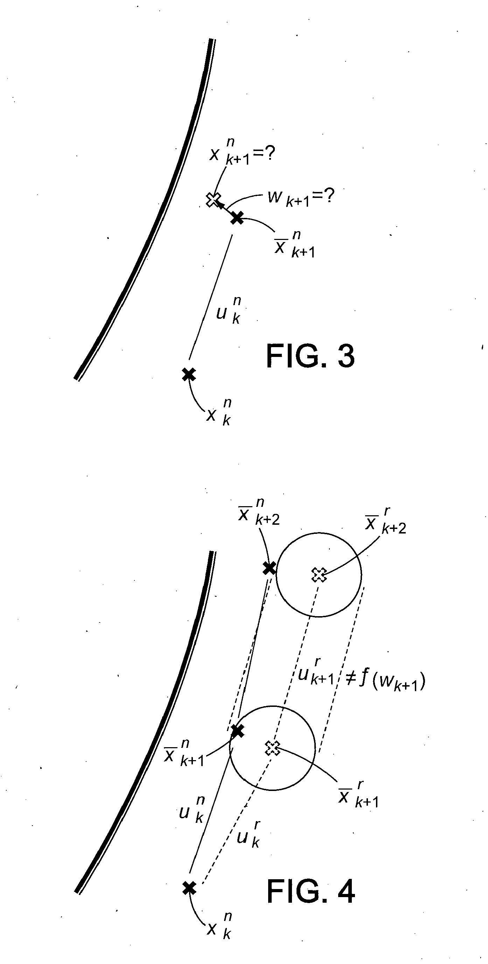

In comparison, figure 3 illustrates the problem when the state $x_{k+1}^n$ is not observed, so that it is impossible to compute the next command using the nominal MPC. It is not possible either to use the second nominal command that assumes the disturbance and thus the state to be known.

The following describes the principle of the nominal to resilient mode switching to overcome this problem, in a possible embodiment.

The principle of the algorithm is that the controller computes at iteration $k$:

- The nominal command $u_{0|k}^n$ for the next iteration using the most recent observation $x_{0|k} = x_k$, and

- The second resilient command $u_{1|k}^r$ for the iteration after the next one (next-next iteration) in case no command is received by the agent following the application of the command at the next iteration.

It is assumed that these two commands are sent together to the agent. Upon reception, the agent uses the nominal command $u_{0|k}^n$ to drive the plant and stores the resilient command for the next iteration. The agent is assumed to observe the updated state of the plant and to send it to the controller. It may occur that the observation does not reach the controller or that the new nominal command computed from the observation is not received by the agent. The agent then shall use the stored resilient $u_{1|k}^r$ command to drive the system. But this command corresponds to the second one of the resilient SMPC iteration, i.e., a command that shall be applied after the first resilient command $u_{0|k}^r$ that is different from the nominal command currently applied to the system. As the resilient commands are computed assuming no observation of the following observation, it is likely that the first command starts to deviate even slightly the plant operation from a possible obstacle. It is thus required to compensate for the difference between the state reached using $u_{0|k}^n$ and the one that would have been reached using $u_{0|k}^r$ .

The starting point of the operation is the state reached using the nominal command:

$$x_{k+1}^n = Ax_k^n + Bu_{0|k}^n + Ew_k^n \stackrel{\text{def}}{=} \bar{x}_{k+1}^n + Ew_k.$$

Looking now at the states that would have been reached upon the application of the first two resilient commands, one finds:

$$x_{k+1}^r = Ax_k^n + Bu_{0|k}^r + Ew_k^r \stackrel{\text{def}}{=} \bar{x}_{k+1}^r + Ew_k^r,$$

$$x_{k+2}^r = Ax_{k+1}^r + Bu_{1|k}^r + Ew_{k+1}^r.$$

and

$$x_{k+2}^r = A\bar{x}_{k+1}^r + Bu_{1|k}^r + AEw_k^r + Ew_{k+1}^r,$$

$$x_{k+2}^r \overset{\text{def}}{=} \bar{x}_{k+2}^r + AEw_k^r + Ew_{k+1}^r.$$

The command is then computed to drive the state from the "noiseless" values $\bar{x}_{k+1}^n$ to $\bar{x}_{k+2}^r$, with:

$$\bar{x}_{k+2}^r = A\bar{x}_{k+1}^n + Bu_{k+1}^c \Rightarrow u_{k+1}^c = B^\# \bar{x}_{k+2}^r - B^\# A\bar{x}_{k+1}^n,$$

wherein $B^\#$ is the pseudo-inverse of the matrix $B$. As long as the state $\bar{x}_{k+2}^r$ is observable from the state $\bar{x}_{k+1}^n$, then one can define:

$$x_{k+2}^{nr} = Ax_{k+1}^n + Bu_{k+1}^c + Ew_{k+1},$$

$$x_{k+2}^{nr} = Ax_{k+1}^n + (\bar{x}_{k+2}^r - A\bar{x}_{k+1}^n) + Ew_{k+1},$$

$$x_{k+2}^{nr} = \bar{x}_{k+2}^r + AEw_k^n + Ew_{k+1}.$$

It appears that the state $x_{k+2}^r$ that would have been reached with the two resilient commands and the one reached applying the compensation command $u_{k+1}^c$ from $x_{k+1}^n$ have the same mean and similar statistics.

However, it shall be noticed that the state $\bar{x}_{k+2}^r$ is not necessarily observable from the state $\bar{x}_{k+1}^n$. It may be required that:

$$rank(B|, \bar{x}_{k+2}^r - A\bar{x}_{k+1}^n) = rank(B).$$

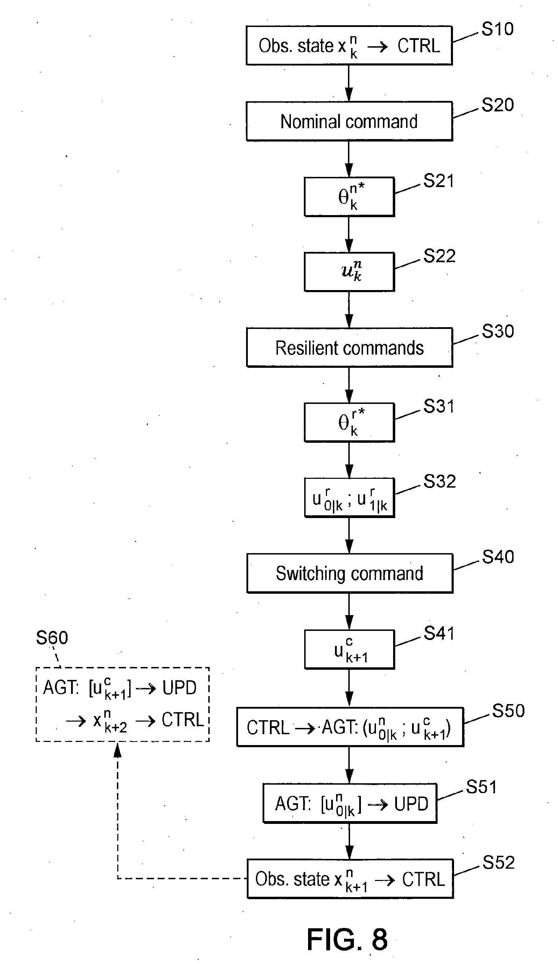

Figure 8 commented below shows main steps of a method run by a processor of a controller when such a processor reads instructions of a computer program based on an algorithm following the principles that have been given above, according to an exemplary embodiment of the present description.

It is reminded that the principle of the proposed algorithm is particularly adapted in case of an observation erasure (errored observation due to a temporary sensor failure, or lost observation owing to temporarily bad transmission conditions, or temporary memory corruption, etc.).

Figure 8 shows steps S10 to S52 which are implemented in a same iteration k of time, while step S60 is implemented in a next iteration k+1.

In step S10, the controller (or its processor) receives the observation of the state $x_k^n$.

In step S20, the controller computes the nominal command, more specifically by solving a non-linear optimization problem at first (S21):

$$\theta_k^{n*} = \underset{\theta_k^n}{arg\,min}\, \mathbb{E}\left(J_N(x_k^n, \theta_k^n)\right), \text{with } J_N(x_k^n, \theta_k^n) = l_N(x_{N|k}^n) + \sum_{i=0}^{N-1} l(x_{i|k}^n, \theta_{i|k}^n)$$

subject to:

$$\mathbf{x}_k^n = A x_{0|k}^n + B \mathbf{u}_k^n + E \mathbf{w}_k^n,$$

$$\mathbb{P}(\mathbf{G}_i \mathbf{x}_k^n \le \mathbf{g}_i) \ge 1 - \alpha_x, i = 1, \dots, l,$$

$$\mathbb{P}(\mathbf{S}_i \mathbf{u}_k^n \le \mathbf{s}_i) \ge 1 - \alpha_u, i = 1, \dots, q,$$

$$\mathbf{u}_k^n = \mathbf{M}_k^n \mathbf{w}_k^n + \mathbf{v}_k^n,$$

$$x_{0|k}^n = x_k,$$

$$\theta_k^n = (\mathbf{M}_k^n, \mathbf{v}_k^n).$$

The result of this optimization computation, given in step S22, is finally the nominal command:

$$u_k^n = u_{0|k}^n = v_{0|k}^n$$

The next main step S30 performed by the controller relates now to the computation at first of the two resilient commands, by solving more specifically the non-linear optimization problem (S31) given by:

$$\theta_k^{r*} = \underset{\theta_k}{arg\,min}\,\mathbb{E}\left(J_N(x_k^r, \theta_k^r)\right), \text{with } J_N(x_k^r, \theta_k^r) = l_N\left(x_{N|k}^r\right) + \sum_{i=0}^{N-1} l\left(x_{i|k}^r, \theta_{i|k}^r\right)$$

subject to

$$\mathbf{x}_k^r = A x_{0|k}^r + B \mathbf{u}_k^r + E \mathbf{w}_k^r,$$

$$\mathbb{P}(\mathbf{G}_i \mathbf{x}_k^r \le \mathbf{g}_i) \ge 1 - \alpha_x, i = 1, \dots, l,$$

$$\mathbb{P}(\mathbf{S}_i \mathbf{u}_k^r \le \mathbf{s}_i) \ge 1 - \alpha_u, i = 1, \dots, q,$$

$$\mathbf{u}_k^r = \mathbf{M}_k^r \mathbf{w}_k^r + \mathbf{v}_k^r,$$

$$u_{1|k}^r = v_{1|k}^r,$$

$$x_{0|k}^r = x_k,$$

$$\boldsymbol{\theta}_k^r = (\mathbf{M}_k^r, \mathbf{v}_k^r).$$

The result of this second optimization computation, given in step S32, is the pair of resilient commands $u_{0|k}^r, u_{1|k}^r$ .

In main step S40, the controller computes then the nominal to resilient mode switching command, given in step S41 more specifically by:

$$u_{k+1}^c = B^\# \bar{x}_{k+2}^r - B^\# A \bar{x}_{k+1}^n,$$

wherein

$$\bar{x}_{k+1}^n = A x_k^n + B u_{0|k}^n,$$

$$\bar{x}_{k+1}^r = A x_k^n + B u_{0|k}^r,$$

$$\bar{x}_{k+2}^r = A \bar{x}_{k+1}^r + B u_{1|k}^r$$

And $B^\#$ is the pseudo-inverse of matrix $B$.

Then, in main step S50, the Controller (reference CTLR of figure 8) sends the commands $u_{0|k}^n$ and $u_{k+1}^c$ to the agent (reference AGT of figure 8). Upon reception of commands $u_{0|k}^n$ and $u_{k+1}^c$ , the agent updates the plant operation using $u_{0|k}^n$ (step S51), which leads the plant's state, in a next iteration of time $k+1$, to a new (i.e. updated) value $x_{k+1}^n$ given by:

$$x_{k+1}^n = A x_k^n + B u_{0|k}^n + E w_k^n.$$

In the following subsequent step S52, the agent sends the observation $x_{k+1}^n$ of this new state to the controller.
During the next iteration $k + 1$, in a case where the controller does not receive the observation of the state $x_{k+1}^n$ , and cannot then compute nor send any new commands, the agent is configured to use in this case the switching command $u_{k+1}^c$ that was received and stored from the previous iteration k (in steps S40-S41). In main step S60 illustrated in dashed lines in figure 8 because of this particular case of blind situation of the agent, the agent uses this command $u_{k+1}^c$ , which leads to an updated state of the plant in an incremented iteration time $k+2$ (the data of which are to be transmitted to the controller with the hope that they will be well received by the controller):

$$x_{k+2}^n = Ax_{k+1}^n + Bu_{k+1}^c + Ew_{k+1}^n.$$

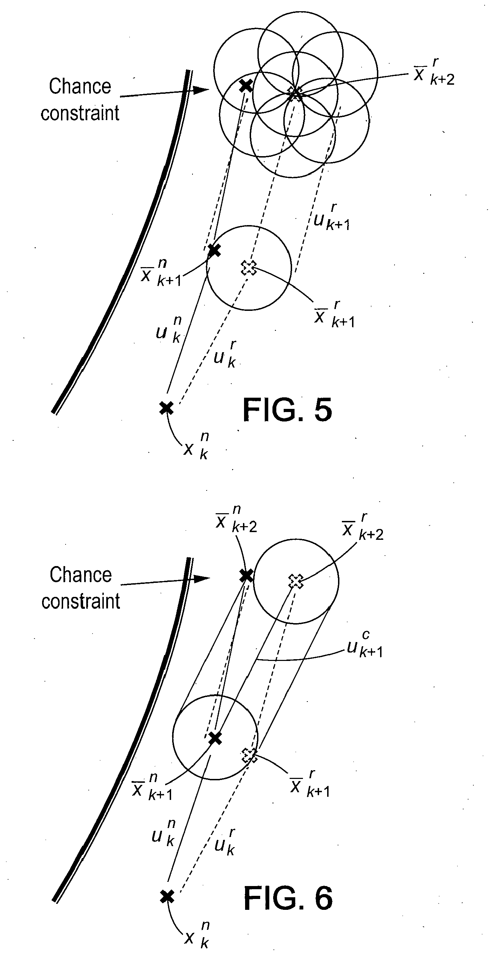

Figures 4 and 5 illustrate the principle of the resilient SMPC. Typically, in figure 4, the resilient SMPC is computed assuming that the current state $x_k^n$ is known (while the next state $x_{k+1}^n$ is unknown). Then, the algorithm would not be able to compensate for the disturbance, unless a set of more conservative commands is applied as illustrated in figure 5 showing that the upper black cross can fall now in one of the circles forming a zone related to the aforesaid chance constraints. In figure 4, the two black crosses represent the average value of the state when applying the nominal controls which tend to compensate for the effect of noise. Figure 4 shows that the resilient command does not take the noise into account. The dotted lines are therefore parallel and not funnelled as in Figure 2. In fact, the resilient states should be "moved away" from the edge, because by adding noise (first only around $\bar{x}_{k+1}^r$ in Figure 4, then around all states reached from these states without noise compensation), the current state falls finally in a larger noisy area. Figure 4 illustrates therefore that the "resilient" circles are at the same distance as the nominal circle that would be around the top black cross.

Now referring to figure 6 showing the principle of the nominal to resilient mode switching, the second resilient command does not need the knowledge of the current state and could be applied. However, this usually assumes that the first resilient command was applied at the previous iteration, while the nominal command $u_k^n$ was applied actually. A specific compensation is therefore to be provided in the computation of the switching command $u_{k+1}^c$ so as to drive the plant's state at the expected position $\bar{x}_{k+2}^r$ from $\bar{x}_{k+1}^n$ .

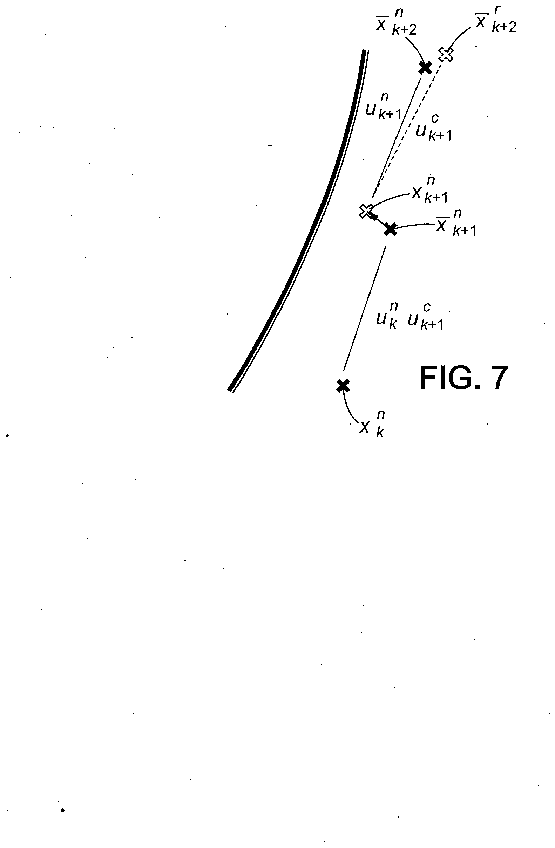

Figure 7 illustrates the general principle of the proposed algorithm, according to a possible embodiment of the method of the present description. Here, the controller transmits to the agent both commands *uk* (previously noted also $u_{0|k}^n$ above) and $u_{k+1}^c$ (respectively the nominal command optimized to turn the plant in an expected state $\bar{x}_{k+1}^n$ at iteration *k*+1 in case it is well received by the agent, and the switching command to make the agent operate in a "blind" mode in case the agent does not receive the next actual command $u_{k+1}^n$ of iteration *k*+1). Therefore, the agent updates the state into $x_{k+1}^n$ using $u_k^n$ and sends it to the controller. Then, if the new state $x_{k+1}^n$ is well received from the agent, the controller computes the next command $u_{k+1}^n$ and sends it to the agent. This is typically the case when the communication between the controller and the agent is satisfactory. Otherwise (in case of communication loss), especially if the agent did not receive (for example at an expected time) any new command since $u_k^n$ (i.e. no reception of $u_{k+1}^n$ ), the agent applies the previously received switching command $u_{k+1}^c$ to drive the plant to an expected state $\bar{x}_{k+2}^r$ .

The embodiment of the present description is well adapted to one-time or occasional communication loss. If however the communication loss lasts longer, any state of the art policy such as determining a trend of previously received commands and applying a new command following that trend can be provided. Moreover, "at least one switching command" can be provided in advance in case of communication loss. Typically, several commands (more than a threshold number of for example 3 commands

$$u_{k+2}^r, u_{k+3}^r, ...,$$

after the switching command $u_{k+1}^c$ ) can be provided, in addition to the switching command, for an industrial processing machine, while fewer commands (less than a threshold number of 3 commands for example) can be provided for other applications such as an autonomous vehicle. It can be understood thus that the number of successive commands after the first switching command $u_{k+1}^c$ can be parametrized depending on the application.

On the other hand, upon reception of a new state from the agent (once the communication is reestablished), the controller will be able to quasi-instantly determine a command appropriate to that state.

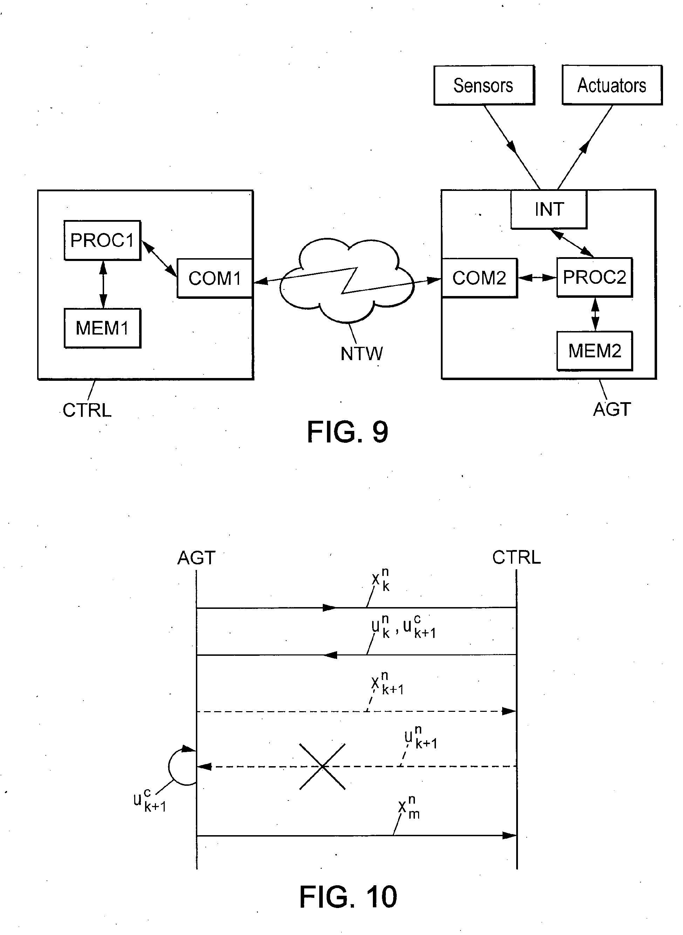

Referring now to figure 9, a system according to the present description can include an agent AGT and a controller CTLR.

The controller CTLR can include a processing circuit comprising:

- A communication interface COM1 to receive data of a current state from the agent AGT and transmit commands to the agent (through the network NTW),
- A processor PROC1 configured to read instructions of a computer program according to the present description, and to implement consequently steps of the method according to the present description (typically the computation of the switching command for a next iteration k+1 in addition to the nominal command computed for a current iteration $k$),
- A memory unit MEM1 to store at least such instructions of the computer program according to the present description.

The agent AGT can include a processing circuit comprising, as shown in the example of figure 9:

- A communication interface COM2 to receive commands from the controller CTLR and to transmit data of a current state to the controller (through a network NTW which can be a wireless network for example),
- A processor PROC2 configured to read instructions of a computer program according to the present description, and to implement consequently steps of the method according to the present description (for example storing temporarily and eventually using the switching command when no nominal command has been received after an expected time),
- A memory unit MEM2 to store at least such instructions of the computer program according to the present description,
- A control interface to send commands to the actuators of a plant, and an input interface to receive measurement data from sensors located in the plant, both interfaces being labelled "INT" in figure 9.

Of course, the computer program instructions can be distributed between the respective memories of the agent and the controller.

Figure 10 represents a communication diagram between the agent and the controller of figure 9. Typically, the agent AGT is configured to transmit sensors measurement data to the controller CTLR as they are available, defining thus, at the controller side a current state $x_k^n$ of the plant controlled by the agent. Based on this current state, the controller computes both:

- a nominal command $u_k^n$ to drive the plant to turn its state into a new state $x_{k+1}^n$, and

- a switching command $u_{k+1}^c$ to be applied by the agent in case where a nominal command $u_{k+1}^n$ is not received by the agent in a next iteration $k$+1, meaning that a communication loss occurred.

Indeed, in any either of these situations of communication loss, having the switching command, at the agent side, will be helpful for the agent:

- When the controller could not receive the data of the new state $x_{k+1}^n$ (dashed arrow of figure 10) and was unable then to compute $u_{k+1}^n$, or

- When the agent could not receive the nominal command $u_{k+1}^n$ to drive the plant into state $x_{k+2}^n$.

In any case, when the agent does not receive the expected nominal command $u_{k+1}^n$, it uses the switching command $u_{k+1}^c$, and attempts to send repeatedly data of the current state $x_m^n$ (with $m$>$k$) to the controller.

Of course, the present disclosure is not limited to the above example embodiments and extends to other variants. For example, the nominal SMPC can be implemented for observability enforcement. In the examples above, it is assumed that the state $\bar{x}_{k+2}^r$ is observable from the state $\bar{x}_{k+1}^n$, which is not necessarily the case in practice. An alternative is thus to add a constraint to the nominal SMPC such that the resilient state becomes observable.

Moreover, the proposed algorithm can be extended to any output feedback SMPC algorithm relying on the same principle of building a command from past estimated states (or so-called "innovations").

**Claims**

1. A method to control an agent (AGT) operating at least one actuator according to commands

    - repeatedly received from a controller (CTLR), said agent receiving repeatedly measurement data from at least one sensor sensing an environment of the actuator, said measurement data defining, at an iteration $k$, a current state ( $x_k^n$ ) of the actuator's environment resulting from the application by the actuator of a nominal command ( $u_{k-1}^n$ ) at a previous iteration $k$-1,

    said nominal command ( $u_{k-1}^n$ ) at previous iteration $k$-1 being initially:

    - computed by the controller (CTLR) based on a current state ( $x_{k-1}^n$ ) of the actuator's environment defined at least by measurement data acquired by the sensor during said previous iteration $k$-1, and
    - transmitted by the controller (CTLR) to the agent (AGT) to be applied by the actuator,
    Wherein the controller (CTLR), at each iteration $k$:

        - computes, in addition to said nominal command ( $u_k^n$ ), a switching command ( $u_{k+1}^c$ ) based at least on the current state ( $x_k^n$ ) at said iteration $k$, and
        - transmits to the agent (AGT) said switching command ( $u_{k+1}^c$ ) along with said nominal command ( $u_k^n$ ), said switching command ( $u_{k+1}^c$ ) being intended to be used by the agent to operate the actuator in case no command is received by the agent following the application of the nominal command ( $u_k^n$ ) of iteration $k$.

2. The method of claim 1, wherein, the agent and the controller being connected through a wireless network, a loss of at least one data packet due to temporary bad network conditions causes a non-reception of a command by the agent, and subsequently the use of the switching command by the agent.

3. The method to anyone of claims 1 and 2, wherein the agent (AGT) applies the nominal command ( $u_k^n$ ) received from the controller and stores in memory the switching command ( $u_{k+1}^c$ ) received along with the nominal command ( $u_k^n$ ) so as to retrieve from said memory and use said switching command ( $u_{k+1}^c$ ) if a next nominal command ( $u_{k+1}^n$ ) is not received during a next iteration $k$+1,

    the application of said switching command ( $u_{k+1}^c$ ) being assumed to drive the actuator's environment, in a next-next iteration $k$+2, to an expected state ( $\bar{x}_{k+2}^r$ ) from a previous expected state ( $\bar{x}_{k+1}^r$ ) at said next iteration $k$+1, which is assumed to result from the application of the last nominal command ( $u_k^n$ ) received by the agent.

4. The method according to claim 3, wherein the controller computes the switching command ( $u_{k+1}^c$ ) based on:

    - a first resilient command ( $u_k^r$ ) supposed to drive the environment state to a first assumed state ( $\bar{x}_{k+1}^r$ ) at said next iteration $k$+1,
    - a second resilient command ( $u_{k+1}^r$ ) supposed to drive the environment state to a second assumed state ( $\bar{x}_{k+2}^r$ ) at said next-next iteration $k$+2, and
    - a compensation to take into account the actual application of the nominal command ( $u_k^n$ ) instead of the first resilient command ( $u_k^r$ ).

5. The method according to claim 4, wherein said compensation is determined from chance constraints statistical calculations.

6. The method according to anyone of the precedent claims, wherein the controller applies a rule according to which a state $x_{k+1}$ at a next iteration $k+1$ depends on:

- the state $x_k$ at current iteration $k$,
- the command $u_k$ applied at current iteration $k$, and
- a random process $w_k$ caused by environment disturbance at iteration $k$.

7. The method of claim 6, wherein the controller implements a stochastic model predictive control where an uncertain part of the actuator's environment is statistically modelled, represented by an equation of the type: $x_{k+1} = Ax_k + Bu_k + Ew_k$, where:

- $k$ is a discrete time related to successive iterations,
- vector $x_k \in \mathbb{R}^n$ denotes the current state at iteration $k$,
- vector $u_k \in \mathbb{R}^m$ denotes the command to be applied at iteration $k$,
- vector $w_k \in \mathbb{R}^q$ is the random process caused by environment disturbance at iteration $k$,
- A, B and E are matrices.

8. The method according to claim 7, combined with anyone of claims 4 and 5, wherein the switching command is given by:

$$u_{k+1}^c = B^{\#} \bar{x}_{k+2}^r - B^{\#} A \bar{x}_{k+1}^n,$$

Where $B^{\#}$ is the pseudo-inverse matrix of matrix $B$.

9. The method of claim 8, wherein the assumed state following the application of the nominal command $u_k^n$, said first assumed state after application of the first resilient command $u_k^r$, and said second assumed state after application of the second resilient command $u_{k+1}^r$, are respectively expressed as:

$$\bar{x}_{k+1}^n = Ax_k^n + Bu_k^n,$$

$$\bar{x}_{k+1}^r = Ax_k^n + Bu_k^r,$$

$$\bar{x}_{k+2}^r = A\bar{x}_{k+1}^r + Bu_{k+1}^r.$$

10. The method according to anyone of claims 7 to 9, wherein the nominal command is given by: $u_{0|k}^n = v_{0|k}^n$, a command being expressed by:

$$u_{i|k} = \sum_{j=1}^{i-1} M_{i-j|k} w_{j|k} + v_{i|k}, i = 0, \ldots, N-1,$$

Where $\sum_{j=1}^{i-1} M_{i-j|k} w_{j|k}$ represents a feedback component compensating for deviation due to environment disturbance.

11. The method according to claim 10, wherein parameters $M_{i-j|k}$ are such that $M_{i-j|k} \in \mathbb{R}^{m \times r}$ and are each one represented by a matrix of coefficients associated with past k-step disturbances.

**12.** The method according to anyone of claims 7 to 11, wherein the controller computes an optimization solution at least for determining the nominal command, based on:

$$\theta_k^{n*} = \underset{\theta_k^n}{arg\ min}\ \mathbb{E}\left(J_N(x_k^n, \theta_k^n)\right), \text{with } J_N(x_k^n, \theta_k^n) = l_N\left(x_{N|k}^n\right) + \sum_{i=0}^{N-1} l\left(x_{i|k}^n, \theta_{i|k}^n\right)$$

subject to:

$$\mathbf{x}_k^n = \mathbf{A}x_{0|k}^n + \mathbf{B}\mathbf{u}_k^n + \mathbf{E}\mathbf{w}_k^n,$$

$$\mathbf{u}_k^n = \mathbf{M}_k^n\mathbf{w}_k^n + \mathbf{v}_k^n,$$

$$x_{0|k}^n = x_k,$$

$$\theta_k^n = (\mathbf{M}_k^n, \mathbf{v}_k^n),$$

Where:

$$\mathbf{x}_k = \left[x_{0|k}, x_{1|k}, \dots, x_{N|k}\right]^t,$$

$$\mathbf{u}_k = \left[u_{0|k}, x_{1|k}, \dots, x_{N-1|k}\right]^t,$$

$$\mathbf{w}_k = \left[w_{0|k}, w_{1|k}, \dots, w_{N-1|k}\right]^t,$$

Matrices $\mathbf{A} \in \mathbb{R}^{(N+1)n}$, $\mathbf{B} \in \mathbb{R}^{(N+1)n \times Nm}$, and $\mathbf{E} \in \mathbb{R}^{(N+1)n \times Nq}$ are given by:

$$\mathbf{A} = \begin{bmatrix} I_n \\ A \\ A^2 \\ \vdots \\ A^N \end{bmatrix}, \mathbf{B} = \begin{bmatrix} 0 & 0 & \dots & 0 \\ B & 0 & \cdots & 0 \\ AB & \ddots & 0 & 0 \\ \vdots & \ddots & B & 0 \\ A^{N-1}B & \dots & AB & B \end{bmatrix}, \mathbf{E} = \begin{bmatrix} 0 & 0 & \dots & 0 \\ E & 0 & \cdots & 0 \\ AE & \ddots & 0 & 0 \\ \vdots & \ddots & E & 0 \\ A^{N-1}E & \dots & AE & E \end{bmatrix}$$

And

$$\mathbf{v}_k = \left[v_{0|k}, v_{1|k}, \dots, v_{N-1|k}\right]^t,$$

$$\mathbf{M}_k = \begin{bmatrix} 0 & 0 & \dots & 0 \\ M_{1|k} & 0 & \cdots & 0 \\ M_{2|k} & \ddots & 0 & 0 \\ \vdots & \ddots & 0 & 0 \\ M_{N-1|k} & \dots & M_{1|k} & 0 \end{bmatrix}.$$

13. The method according to claim 12, combined with claim 4, wherein the controller computes an optimization solution for determining furthermore said first and second resilient commands, based on:

$$\theta_k^{r*} = \underset{\theta_k}{arg\ min}\ \mathbb{E}\left(J_N(x_k^r, \theta_k^r)\right), \text{with } J_N(x_k^r, \theta_k^r) = l_N\left(x_{N|k}^r\right) + \sum_{i=0}^{N-1} l\left(x_{i|k}^r, \theta_{i|k}^r\right).$$

subject to

$$\mathbf{x}_k^r = \mathbf{A}x_{0|k}^r + \mathbf{B}\mathbf{u}_k^r + \mathbf{E}\mathbf{w}_k^r,$$

$$\mathbf{u}_k^r = \mathbf{M}_k^r \mathbf{w}_k^r + \mathbf{v}_k^r,$$

$$u_{1|k}^r = v_{1|k}^r,$$

$$x_{0|k}^r = x_k,$$

$$\theta_k^r = (\mathbf{M}_k^r, \mathbf{v}_k^r),$$

Where said first and second resilient commands are respectively noted above $u_{0|k}^r, u_{1|k}^r$, with $u_{0|k}^r = u_k^r$ and $u_{1|k}^r = u_{k+1}^r$.

14. The method according to anyone of claims 12 and 13, wherein chance constraints are applied to compute said commands and are given by:

$$\mathbb{P}(\mathbf{G}_i \mathbf{x}_k^n \leq \mathbf{g}_i) \geq 1 - \alpha_x, i = 1, \dots, l,$$

$$\mathbb{P}(\mathbf{S}_i \mathbf{u}_k^n \leq \mathbf{s}_i) \geq 1 - \alpha_u, i = 1, \dots, q,$$

representing probabilistic constraints on state and control input,
$\mathbf{G}_i$ and $\mathbf{S}_i$ denoting each row of matrix $\mathbf{G}$ and $\mathbf{S}$, with $\mathbf{G} \in \mathbb{R}^{a \times (N+1)n}$, $\mathbf{g} \in \mathbb{R}^a$, $\mathbf{S} \in \mathbb{R}^{b \times Nm}$, $\mathbf{s} \in \mathbb{R}^b$,

$g_i$ and $s_i$ denoting each component of vectors **g** and **s,** and
$\alpha_x$ and $\alpha_u$ denoting a probability level of constraint violation.

15. A system comprising a controller and an agent configured to implement the method according to the precedent claims.

16. A controller of a system according to claim 15, configured for computing and transmitting to the controller said switching command along with said nominal command.

17. An agent of a system according to claim 15, configured for:

    - using said nominal command when currently received, and storing the switching command received along with the nominal command, or
    - retrieving and using a latest received switching command when said nominal command is not received.

18. A computer program comprising instructions causing the implementation of the method according to anyone of claims 1 to 14, when said instructions are run by a processor.

Command

PID or MPC
controller

Agent

Sensing

# FIG. 1

Chance
constraint

$\overline{x}^n_{k+2}$

$x^n_{k+1}$

$w_{k+1}$

$\overline{x}^n_{k+1}$

disturbance

$u^n_k$

$x^n_k$

# FIG. 2

FIG. 3

FIG. 4

Chance
constraint

$\overline{x}^{r}_{k+2}$

$u^{r}_{k+1}$

$\overline{x}^{n}_{k+1}$

$u^{n}_{k}$

$u^{r}_{k}$

$\overline{x}^{r}_{k+1}$

$x^{n}_{k}$

**FIG. 5**

$\overline{x}^{n}_{k+2}$

$\overline{x}^{r}_{k+2}$

Chance
constraint

$u^{c}_{k+1}$

$\overline{x}^{n}_{k+1}$

$\overline{x}^{r}_{k+1}$

$u^{n}_{k}$

$u^{r}_{k}$

$x^{n}_{k}$

**FIG. 6**

$$\overline{X}{}^{n}_{k+2} \qquad \overline{X}{}^{r}_{k+2}$$

$$u^{n}_{k+1} \qquad u^{c}_{k+1}$$

$$X^{n}_{k+1}$$

$$\overline{X}{}^{n}_{k+1}$$

$$u^{n}_{k} \quad u^{c}_{k+1}$$

# FIG. 7

$$X^{n}_{k}$$

Obs. state $x_k^n \rightarrow$ CTRL — S10

Nominal command — S20

$\theta_k^{n*}$ — S21

$u_k^n$ — S22

Resilient commands — S30

$\theta_k^{r*}$ — S31

$u_{0|k}^r ; u_{1|k}^r$ — S32

Switching command — S40

$u_{k+1}^c$ — S41

S60

AGT: $[u_{k+1}^c] \rightarrow$ UPD
$\rightarrow x_{k+2}^n \rightarrow$ CTRL

CTRL $\rightarrow$ AGT: $(u_{0|k}^n ; u_{k+1}^c)$ — S50

AGT: $[u_{0|k}^n] \rightarrow$ UPD — S51

Obs. state $x_{k+1}^n \rightarrow$ CTRL — S52

# FIG. 8

FIG. 9

FIG. 10

Europäisches
Patentamt

European
Patent Office

Office européen
des brevets

# EUROPEAN SEARCH REPORT

Application Number

EP 23 31 5151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EKATERINA ABRAMOVA ET AL: "RLOC: Neurobiologically Inspired Hierarchical Reinforcement Learning Algorithm for Continuous Control of Nonlinear Dynamical Systems", ARXIV.ORG, CORNELL UNIVERSITY LIBRARY, 201 OLIN LIBRARY CORNELL UNIVERSITY ITHACA, NY 14853, 7 March 2019 (2019-03-07), XP081130789, | 1-3,6,7, 15-18 | INV. G05B9/02 |
| A | * page 5, line 29 - line 43 * <br> * page 7, line 13 - line 22 * ----- | 4,5,8-14 | |
| Y | US 2013/285589 A1 (SUGIE HIROSHI [JP] ET AL) 31 October 2013 (2013-10-31) <br> * paragraph [0062] * <br> * paragraph [0069] * <br> * paragraph [0079] * ----- | 1-3,6,7, 15-18 | |

TECHNICAL FIELDS
SEARCHED (IPC)

G05B

The present search report has been drawn up for all claims

| Place of search | Date of completion of the search | Examiner |
|---|---|---|
| The Hague | 12 October 2023 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5151

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | Publication date | Patent family member(s) | Publication date |
|---|---|---|---|
| US 2013285589 A1 | 31-10-2013 | CN 103370664 A | 23-10-2013 |
| | | DE 112011104925 T5 | 14-11-2013 |
| | | JP 5430793 B2 | 05-03-2014 |
| | | JP WO2012114435 A1 | 07-07-2014 |
| | | KR 20130121142 A | 05-11-2013 |
| | | TW 201251301 A | 16-12-2012 |
| | | US 2013285589 A1 | 31-10-2013 |
| | | WO 2012114435 A1 | 30-08-2012 |

For more details about this annex : see Official Journal of the European Patent Office, No. 12/82